# EUROPEAN PATENT SPECIFICATION

(11) **EP 4 421 523 B1**
(45) Date of publication and mention of the grant of the patent: **11.02.2026**
(21) Application number: 24159676.6
(22) Date of filing: 26.02.2024
(51) Int. Cl.: G01S 7/521, G01S 15/04, G01S 15/88

(54) **ULTRASONIC DETECTION DEVICE AND SYSTEM**
ULTRASCHALLDETEKTIONSVORRICHTUNG UND -SYSTEM
DISPOSITIF ET SYSTÈME DE DÉTECTION ULTRASONORE

(30) Priority: 26.02.2023 CN 202310191468
(43) Date of publication of application: 28.08.2024
(73) Proprietor: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: LIN, Wanjiong, Ningbo, 315103 (CN); WANG, Linji, Ningbo, 315103 (CN); WANG, Ke, Ningbo, 315103 (CN); CHEN, Hui, Ningbo, 315103 (CN); DAI, Jiayun, Ningbo, 315103 (CN)
(74) Representative: 2K Patentanwälte Blasberg Kewitz & Reichel

(56) References cited:
- US-A- 5 569 888
- US-B2- 9 084 047

## Description

### Field of Invention

The invention relates to the technical field of ultrasonic detection technology, and in particular to a system for detecting the flow of people in a predetermined space comprising an ultrasonic detection device.

### Background of Invention

With the rapid development of the national economy and social progress, there are more and more places such as shopping plazas, stores, museums, tourist attractions, etc. The passenger flow is a very critical data for these places which can provide important reference for the management and decision-making of the operators of such places. According to the prior art, an ultrasonic detection device is installed at the entrance of such a place for detecting the passing passenger flow in real-time, and a control signal is then fed back to the electrical appliances in the area, such as lamps, etc. By adjusting the lighting parameters of the lamps in real time, it is possible to reduce the power consumption when there are few people in the area and operation of electrical applicants in the area over long time periods when there are just a few people in the area can be avoided.

Conventional control applications for lamps according to the passenger flow are still immature. Among them, some of the control methods for switching off and on lamps on the basis of whether or not people are passing by is single. Some other control methods have introduced passenger flow monitoring and statistics mechanism by setting ultrasonic detectors at the entrance which emit ultrasonic waves downwards, then collecting passenger flow information to control the lamps according to the data collected.

The ultrasonic detectors use ultrasonic waves to detect passing passenger flow by means of time-based ranging. And the principle is as follows: a beam of ultrasonic waves is emitted from the ultrasonic transmitting end and the timing starts at the same time. The emitted ultrasonic waves propagate in the medium, and because acoustic waves have the characteristics of reflection, they will be reflected back when they encounter an obstacle. When the receiving end of the ultrasonic detector receives the reflected ultrasonic wave, the timing stops. When the medium is e.g. air, the speed of sound is 340m/s. When the ultrasonic waves are launched to the ground, the detection area is corresponding to the area where the beam is projected on the ground. When someone enters the detection area and is detected, the height of the person relative to the ground makes the time required to receive the reflected ultrasonic wave to change, so that it can be judged that someone has passed through the detection area.

Generally speaking, the detection range of ultrasonic detectors is the coverage of the columnar acoustic beam projected onto the ground, and it is not possible to accurately control the detection area of a specific site. For example, for the flow of passengers entering a door, it is necessary to detect changes in the flow of passengers within the width of the door. However, generally the ultrasonic detector directly emits ultrasonic waves so that the coverage of the detection area on the ground is a circle or a near-circle, which cannot match the width, and as a result it is easy to miss detecting the flow of passengers located at the edge of the range. In addition, along the direction of the entry and/or exit of the flow of passengers, the detection range in the shape of a circle is greater than the single striding distance of one person, and it is easy to include more than one person walking around at the same time, which does not enable a good discrimination. Therefore it is necessary to improve the discriminative ability for different individuals.

Accordingly, those skilled in the art endeavor to develop an ultrasonic detection device to match the specific detection range and to improve discriminative ability.

US 5 569 888 A discloses an ultrasonic detection system for providing a signal indication of an object or passenger being within the path of the door of an elevator. Ultrasonic waves are pulsed and received during certain time windows to discriminate for the presence of human begins of predetermined height. In order to cover the entire area of the elevator door, the ultrasonic waves are reflected in such a manner by a reflector that the sonic response is provided in the form of a curtain or sheet extending along the width of the elevator door. The detection system does not allow to detect the flow of people in a direction perpendicular to this curtain generated along the width of the elevator door.

US 9 084 047 B2 discloses a system for enhancing sound provided by a pair of speakers relative to a listener. The system is not for use for the re-shaping of ultrasonic waves.

### Summary of Invention

It is an object of the present invention to provide an ultrasonic detection system for detecting the flow of people in a predetermined space.

This problem is solved by a system for detecting the flow of people in a predetermined space as claimed in claim 1. Further advantageous embodiments are the subject-matter of the dependent claims.

The system for detecting the flow of people in a predetermined space according to the present invention is configured to solve the poor discrimination problem due to the large circular detection area of the existing ultrasonic detector.

To achieve the above object, the present invention provides a system for detecting the flow of people in a predetermined space, comprising an ultrasonic probe configured to transmitting ultrasonic waves and receiving echoes, and a reflector arranged spaced apart from the ultrasonic probe, wherein the ultrasonic detection device is arranged at a predetermined distance above an entrance and/or exit pathway of said predetermined space, and the reflector is configured for redistributing the energy of the ultrasonic wave to change the detection range of the ultrasonic wave perpendicular to the direction of flow of people such that it matches the width of the entrance and/or exit pathway of the predetermined space, wherein the reflector of the ultrasonic detection device is further configured for redistributing the energy of the ultrasonic waves such that the detection range along the direction of the flow of people matches an average striding distance of the people along the direction of the flow of people.

Optionally, the ultrasonic detection device is used for detecting the flow of people in a predetermined space, wherein the ultrasonic device is arranged at a predetermined distance above the entrance and/or exit pathway of the predetermined space to detect the flow of people passing through; and after ultrasonic waves pass the reflector and are reflected by the reflector, the detection range along the direction of flow of people matches the striding distance, in particular an average striding distance (step length) along a direction of the flow of people and the detection range perpendicular to the direction of flow of people is matched the width of an entrance and/or exit pathway of the predetermined space.

The reflector stretches or shrinks the ultrasonic wave distribution range in a transverse direction of the detection area, and stretches or shrinks the ultrasonic wave distribution range in a longitudinal direction of the detection area, and may be configured to readjust the ultrasonic wave distribution range in multiple dimensions of the detection area.

The predetermined space may a supermarket, a shopping mall, a store or a museum.

Optionally, the reflector comprises a reflecting surface.

Optionally, the reflecting surface comprises a convergence zone and/or a dispersion zone, the convergence zone causing the ultrasonic waves from the ultrasonic probe to converge along an X-axis direction and/or a Y-axis direction, and/or the dispersion zone causing the ultrasonic waves from the ultrasonic probe to disperse along the X-axis direction and/or the Y-axis direction.

In one embodiment of the present invention, the reflector is a reflecting plate comprising a central portion and two sides opposite to each other, wherein along an X-axis direction and/or a Y-axis direction, the reflector is thicker at the central portion (in the middle) and thinner at the two opposite sides, so that the ultrasonic waves from the ultrasonic probe can disperse along the corresponding direction.

In one embodiment of the present invention, the reflector is a reflecting plate comprising a central portion and two sides opposite to each other, wherein along an X-axis direction and/or a Y-axis direction, the reflector is thinner at the central portion (in the middle) and thicker on the two opposite sides, so that the ultrasonic waves from the ultrasonic probe can converge along the corresponding direction.

In one embodiment of the present invention, the ultrasonic probe is mounted along a horizontal direction, and the reflecting surface is provided at an outward inclination with respect to the ultrasonic probe, so that the reflecting surface reflects the ultrasonic waves coming from the ultrasonic probe and then propagates them downwards.

Optionally, the ultrasonic detection device further comprises an acoustic wave absorbing device arranged on the ultrasonic probe or on the reflector or in between the ultrasonic probe and the reflector.

Optionally, the ultrasonic detection device further comprises a mounting bracket for mounting the ultrasonic probe.

Optionally, the reflector is integrated with the mounting bracket.

### Technical effects of the present invention

In the ultrasonic detection device used according to the present invention, firstly, by additionally providing a reflector, the ultrasonic detection method can be altered from a conventional direct type method to a horizontal type method, where the direction of propagation of the ultrasonic waves transmitted from the ultrasonic probe is redirected in a different direction, in particular in a direction perpendicular to the direction of propagation of the ultrasonic waves before being reflected by the reflector. Moreover, the detection area may also be altered correspondingly from being perpendicular to being horizontal to the ultrasonic probe. Secondly, by means of the design of the reflector's reflecting surface, the conventional circular detection area used in horizontal detection resulting from direct emission of the ultrasonic waves towards the space to be monitored can be altered to an elliptical shape or arbitrary other shape. Thereby, the detection area can be adjusted corresponding to an average striding distance (step length) of pedestrians, and the detection accuracy can be improved.

### Overview on drawings

Hereinafter, exemplary embodiments of the present invention will be disclosed with reference to the drawings, from which further features, technical effects and problems to be solved will become apparent. In the drawings:
- Fig. 1: is a structural schematic diagram of the place of implementation of the ultrasonic detection device used in a system for detecting the flow of people in a predetermined space according to the present invention;
- Fig. 2: is a structural schematic diagram of the ultrasonic detection device used in a system for detecting the flow of people in a predetermined space according to the present invention in cross-section;
- Fig. 3: is a structural schematic diagram of an embodiment of the ultrasonic detection device, wherein (a) is a three-dimensional structural schematic diagram, (b) is a first cross-sectional schematic diagram, and (c) is a second cross-sectional schematic diagram;
- Fig. 4: is a schematic diagram of the working principle of the reflector used in a system for detecting the flow of people in a predetermined space according to the present invention in an embodiment, showing how the ultrasonic signal is reflected at a first cross-section;
- Fig. 5: is a schematic diagram of the structure of the ultrasonic detection device of Fig. 2 to 4 provided with an acoustic wave absorbing device;
- Fig. 6: is a schematic structural diagram of another embodiment of a reflector used in a system for detecting the flow of people in a predetermined space according to the present invention;
- Fig. 7: is a schematic structural diagram of another embodiment of a reflector used in a system for detecting the flow of people in a predetermined space according to the present invention;
- Fig. 8: is a schematic structural diagram of another embodiment of a reflector of the ultrasonic detection device used in a system for detecting the flow of people in a predetermined space according to the present invention;
- Fig. 9: is a schematic structural diagram of another embodiment of a reflector of the ultrasonic detection device used in a system for detecting the flow of people in a predetermined space according to the present invention; and
- Fig. 10: is a schematic structural diagram of another embodiment of a reflector of the ultrasonic detection device used in a system for detecting the flow of people in a predetermined space according to the present invention.

Throughout the drawings, like reference numerals designate identical or substantially equivalent elements or groups of elements.

### Detailed description of preferred embodiments

Specific embodiments of the present invention will be further described in detail below based on the accompanying drawings. It should be understood that the descriptions of the embodiments of the present invention herein are not intended to limit the protection scope of the present invention.

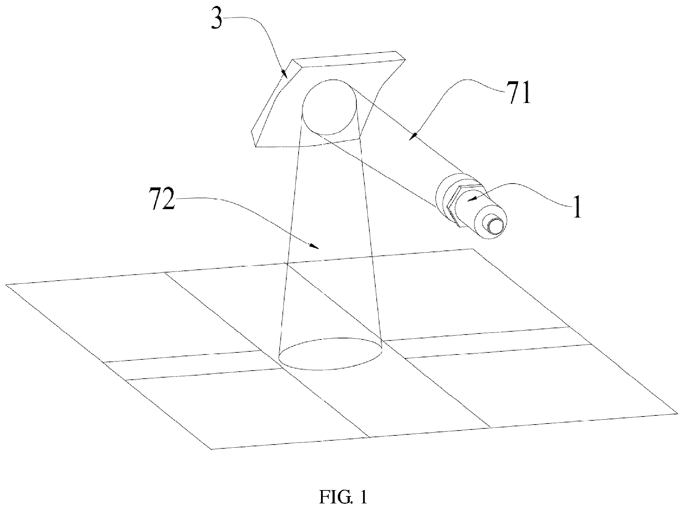

An ultrasonic detection device used by the present invention is shown in FIGs.1-4, the basic structure of which includes an ultrasonic probe 1 and a reflector 3. The ultrasonic probe 1 is used for transmitting ultrasonic waves and receiving echoes between the ultrasonic probe 1 and the detection area; the reflector 3 is fixedly mounted spaced apart from the ultrasonic probe 1, and is suitable for reflecting the ultrasonic waves, and redistributing the energy of the ultrasonic wave in order to change the detection range of the ultrasonic wave.

FIG. 1 illustrates the scene where the ultrasonic detection device is used to detect a flow of people in a space. The ultrasonic device is arranged above the entrance and/or exit pathway of the space to detect the flow of people passing through. And after the ultrasonic waves pass the reflector 3 and are reflected by the reflector 3, the detection range along the direction of flow of people matches the striding distance and the detection range perpendicular to the direction of flow of people matches the width of the entrance and/or exit pathway of the space to be monitored. As an example, the space to be monitored may be a supermarket, a shopping mall, a store or a museum.

The striding distance (step length) used for monitoring the flow of people refers to an average striding distance (step length). Typically, the standard distance for a forward march is 75 cm per step. The average striding distance for adults is about 70 cm. For applicable spaces such as shopping malls, supermarkets and stores, the striding distance of the flow of people can be obtained based on statistical laws combing spatial characteristics when people enter and exit.

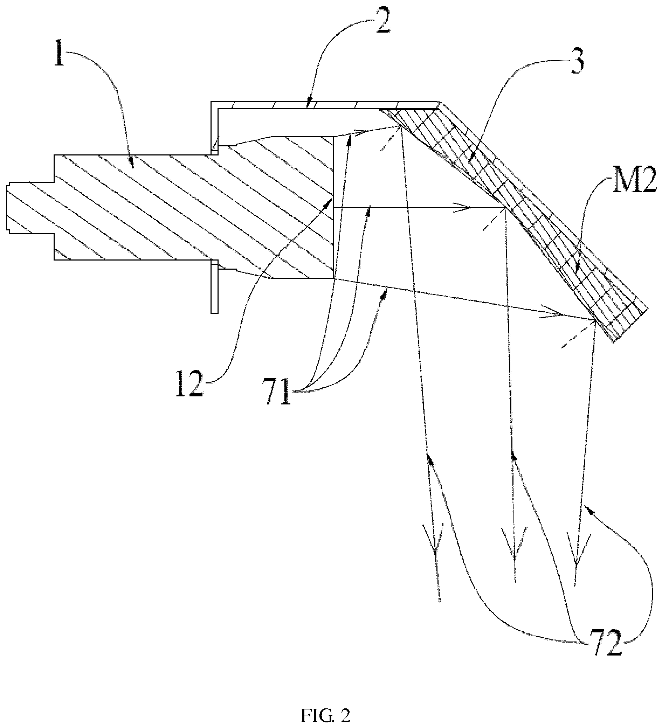

FIG. 2 shows a structural embodiment of the ultrasonic detection device used in a system for detecting the flow of people in a predetermined space according to the present invention. The ultrasonic probe 1 comprises a probe portion 12 at the end thereof, which is suitable for transmitting and receiving ultrasonic waves; a mounting bracket 2 configured for fixedly connecting to the ultrasonic probe 1; and a reflector 3 fixedly mounted spaced apart from the ultrasonic probe 1, set at an outward inclination with respect to the ultrasonic probe 1, having a length direction, i.e., an X-axis direction, and extending farther away from the probe portion 12 along the length direction X. The reflector 3 comprises a reflecting surface 31 provided opposite to the probe portion 12, which is suitable for reflecting ultrasonic waves. Preferably, the reflector 3 is fixedly connected to one end of the mounting bracket 2. Furthermore, the reflecting surface 31 is configured for changing the propagation direction of the ultrasonic waves after reflecting the ultrasonic waves, e.g., ultrasonic waves originally propagating horizontally become vertically propagating after reflection. The reflecting surface 31 is made of materials suitable for reflecting the ultrasonic waves, such as stainless steel, acrylic, and the like.

Generally, the ultrasonic waves emitted by the ultrasonic probe 1 propagate along a straight line with a columnar propagation range. For example, when the outlet of the probe portion 12 is circular, the ultrasonic waves propagate in a conical region extending from the outlet, and when they reach the detection plane, the area covered in the plane is a projection of the aforesaid conical region on the detection plane, and the contour of the covered area is an enlarged circle or ellipse. The ultrasonic detection device is improved by providing the reflector 3, which redirects the path of the ultrasonic waves emitted and received by the ultrasonic probe 1. Furthermore, by designing the structure of the reflecting surface 31, the range covered by the ultrasonic waves can be altered by reflecting the ultrasonic waves to accurately match the area that actually needs to be detected.

The reflecting surface 31 comprises a convergence zone and/or a dispersion zone, the convergence zone causing the ultrasonic waves from the ultrasonic probe 1 to converge along an X-axis direction and/or a Y-axis direction, and the dispersion zone causing the ultrasonic waves from the ultrasonic probe 1 to disperse along the X-axis direction and/or the Y-axis direction.

According to the shape of the reflecting surface 31 described above, its profile in the X-axis direction or the Y-axis direction can be varied to redistribute the energy of the ultrasonic waves.

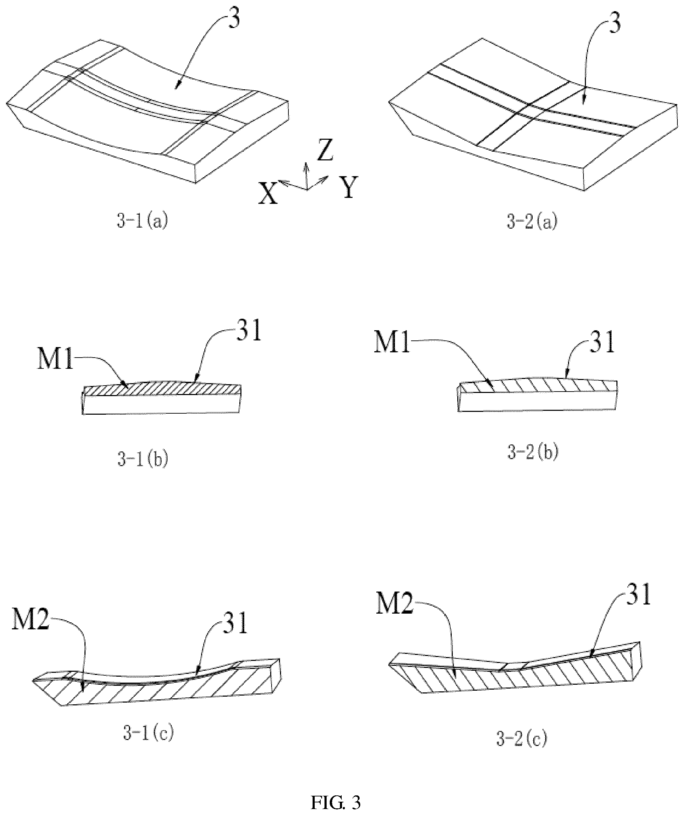

An exemplary embodiment of the reflector 3 used in a system for detecting the flow of people in a predetermined space according the present invention is shown in FIG. 3. Defining a first cross-section M1 as a cross-section of the reflector 3 along a thickness direction Z (Z-axis direction) and a width direction Y (Y-axis direction), in the first cross-section M1, the middle part of the reflecting surface 31 forms a protrusion toward the probe portion 12, and the reflecting surface 31 gradually increases its distance away from the ultrasonic probe 1 from the middle part toward the two opposite ends the reflecting surface 31, thus to form a cross-sectional shape with a thick middle (central portion) and two thin sides along the Y-axis direction. After the ultrasonic waves are reflected by the reflecting surface 31, the reflected wave 72 becomes wider in the Y-axis direction with respect to the incident wave 71, so that the ultrasonic waves from the ultrasonic probe 1 are dispersed along the Y-axis direction while the ultrasonic probe 1 is set unchanged. Thus, the detection width of the detection area is increased in the transverse direction, i.e., in the Y-axis direction. As another optional embodiment, a second cross-section M2 is defined as a cross-section of the reflector 3 along the thickness direction Z and the length direction X. In the second cross-section M2, the reflecting surface 31 is concave, i.e., a cross-sectional shape with two thick sides and a thin middle (central portion) is formed along the X-axis direction, so that ultrasonic waves from the ultrasonic probe 1 converge along the X-axis direction. As shown in FIG. 3, two embodiments of the reflecting surface 31 are provided, exemplified in FIG. 3-1 and FIG. 3-2, having different contour shapes.

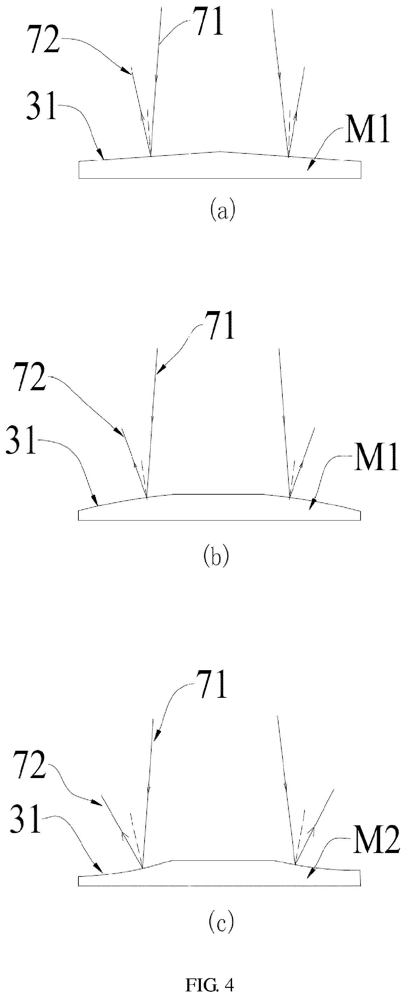

In the first cross-section M1, at least part of the profile of the reflecting surface 31 is a straight line or a curve, i.e., it may be a straight line, a curve or a combination thereof. In an embodiment as shown in FIG. 4(a), the reflecting surface 31 comprises two inclined planes, which are inclined from the middle towards the two opposite ends thereof, and the incident wave 71 is reflected by the reflecting surface 31, so that the reflected wave 72 is dispersed.

In another embodiment as shown in FIG. 4(b), the profile of the reflecting surface 31 in the first cross-section M1 is at least partly a curve, with the center of curvature of the curve being located externally on the back side of the reflecting surface 31. The reflecting surface 31 has a flat surface in the middle and connects curved surfaces at both ends thereof, and the curved surfaces at the two opposite ends thereof are curved outward. Thus after the incident wave 71 is reflected by the reflecting surface 31, the reflected wave 72 formed is dispersed.

In another embodiment as shown in FIG. 4(c), the profile of the reflecting surface 31 in the first cross-section M1 is at least partly a curve, with the center of curvature of the curve being located externally on the front side of the reflecting surface 31. The reflecting surface 31 has a flat surface in the middle and connects curved surfaces at the two opposite ends thereof, and the curved surfaces at the two opposite ends thereof are curved outward. Thus after the incident wave 71 is reflected by the reflecting surface 31, the reflected wave 72 formed is dispersed.

In addition, the profile of the reflector 3 in the first cross-section M1 may also be selected as a straight line, a concave line or a convex line, etc., depending on the different needs for ultrasonic wave distribution in the detection area in the transverse direction or in the width direction Y.

The ultrasonic signal transmitted by the ultrasonic probe 1 has a range close to a columnar shape and has certain dispersion characteristics, as shown in FIG. 2. From the second cross-section M2, after the signal is incident to the reflecting surface 31, because the reflecting surface 31 is designed in a concave shape, which can be designed as a concave curved surface, or as a combination of a plurality of flat surfaces, or as a combination of concave curved surfaces and flat surfaces. The above-described reflecting surface 31 makes the reflected wave 72 of the ultrasonic wave change from diverging to converging in the length direction X, and the dimension of ultrasonic detection in the longitudinal direction of the detection area is compressed.

Furthermore, when the reflecting surface 31 is designed as a concave shape, the angle between the tangent direction at any point of the contour line on the second cross-section M2 and the emission direction of the ultrasonic signal is an acute angle, and this angle tends to gradually increase toward the end that is away from the probe portion 12, so that a convergence effect can be implemented after reflecting the incident ultrasonic waves by the above-mentioned concave reflecting surface 31.

In addition, the reflector 3 may be selected to have its profile in the second cross-section M2 as a straight line, a concave line or a convex line, etc., according to the different needs of the detection area in the longitudinal direction or in the length direction X for the distribution of the ultrasound waves.

In view of the above structure, the ultrasonic detection device redistributes the range of ultrasonic waves in the detection area by means of the reflector 3, to thereby stretch or shrink the ultrasonic wave distribution range in the transverse direction of the detection area, or to thereby stretch or shrink the ultrasonic wave distribution range in the longitudinal direction of the detection area, or to thereby change the distribution of ultrasonic waves in different dimensions of the detection area at the same time. A specific implementation of the above technical effect can be achieved easily by setting the reflecting surfaces 31 of the reflector 3 in different shapes. And the reflecting surfaces 31 can be set in a symmetrical shape, or can be set in an asymmetrical shape, as required.

When an ultrasonic detection device as outlined above is used, it is required that the ultrasonic probe 1 and the reflector 3 do not move relative to the mounting bracket 2, and therefore both components are preferably fixedly mounted to the mounting bracket 2. In the embodiment shown in FIG. 2, the reflector 3 is fixedly attached to an end of the mounting bracket 2. Optionally, the reflector 3 is a reflecting plate, and the reflecting plate is fixed to the mounting bracket 2 by means of bonding, welding, or fastener connections.

According to another preferred embodiment, the reflector 3 may be integrally formed at the end of the mounting bracket 2, i.e., the reflecting surface 31 is obliquely formed at the end of the mounting bracket 2 to reflect the ultrasonic waves from the ultrasonic probe 1.

The design of an ultrasonic probe 1 is conventional. For example, the probe portion 12 is used for transmitting and receiving ultrasonic waves. Components for energy conversion and signal amplification may be set inside the housing of the ultrasonic probe. A control board may be set in the mounting bracket 2 and connected to the ultrasonic probe 1 for controlling the whole operation, for example, firstly, controlling the probe portion 12 to transmit the ultrasonic waves, and then judging (analyzing) the ultrasonic waves received by the probe portion 12, and determining whether or not the received ultrasonic waves are transmitted by the ultrasonic waves emitted by itself, and finally recognizing the magnitude of the received ultrasonic waves.

The ultrasonic probe 1 may have different structures, which can be categorized as a straight probe, an oblique probe, a surface wave probe, a Lamb wave probe, a dual probe (one for transmitting and one for receiving), etc., and those skilled in the art can select specific implementations in accordance with the disclosed technology, and will not be specifically limited herein.

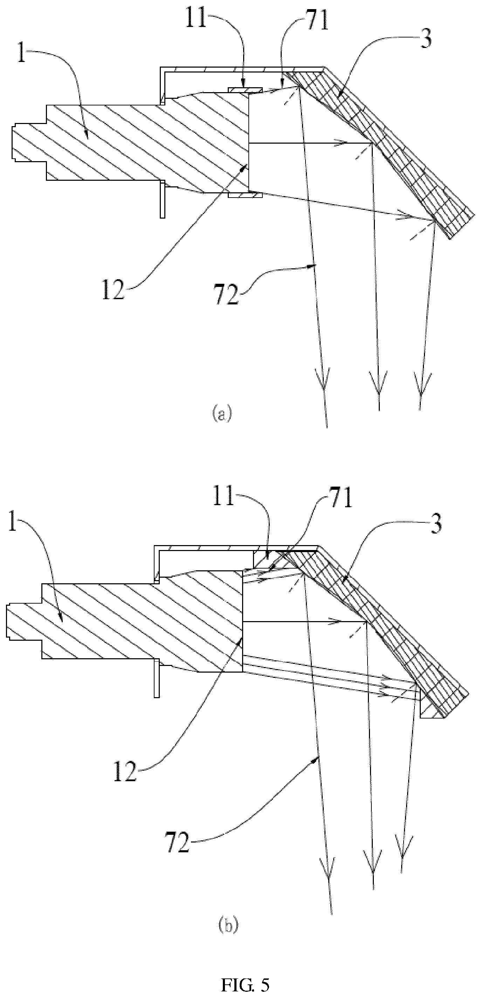

Further, as shown in FIG. 5, an acoustic wave absorbing device 11 may be further provided. The acoustic wave absorbing device 11 may be arranged on the ultrasonic probe 1 (as shown in FIG. 5a) or on the reflector 3 (as shown in FIG. 5b) or in between, and is disposed in the ultrasonic transmission path between the ultrasonic probe 1 and the reflector 3 and/or in the ultrasonic outgoing direction of the reflector 3. Such an acoustic wave absorbing device 11 has a cross-section that is elliptical, rectangular, ellipsoid-like or rectangular-like, and the acoustic wave absorbing device 11 is provided to further limit or change the range of acoustic wave propagation.

In one application of the present invention, the ultrasonic probe 1 is mounted along a horizontal direction, and the reflecting surface 31 is provided at an outward inclination with respect to the ultrasonic probe 1, so that the reflecting surface 31 reflects the ultrasonic waves coming from the ultrasonic probe 1 and then propagates them downwards.

According to the ultrasonic detection device described above, when in use, the ultrasonic detection device can be mounted above the pathway. The reflector 3 reflects the ultrasonic waves toward the ground of the pathway, and, the ultrasonic waves returning from the ground are then received by the ultrasonic probe 1 after reflection by the reflector 3. By setting the shape of the reflector 3 along the first cross-section M1 and the second cross-section M2, the detection area of the ultrasonic waves can be adjusted as required to adapt to the pathway, and the detection width thus can cover a range corresponding to transverse width of the pathway, so as to prevent pedestrians at the edges of the pathway from being missed. According to the structure of the reflector 3 as shown in FIG. 3, along the direction a person walks back and forth, the detection range in the longitudinal direction of the pathway is then narrowed down enough to allow a single person to enter the detection range in the longitudinal direction one by one. And the detection range along the direction of flow of people in and out of the pathway is matched with the striding distance, which significantly reduces the probability of detecting adjacent pedestrians in the front and rear directions at the same time, and strengthens the ability of ultrasonic discernment (discrimination) of pedestrians in the front and rear directions. Accordingly, with the ultrasonic detection device, it is possible to more accurately detect pedestrians passing through a pathway to be monitored, and it is particularly suitable for passenger flow statistics in places such as supermarkets, shopping malls, stores or museums.

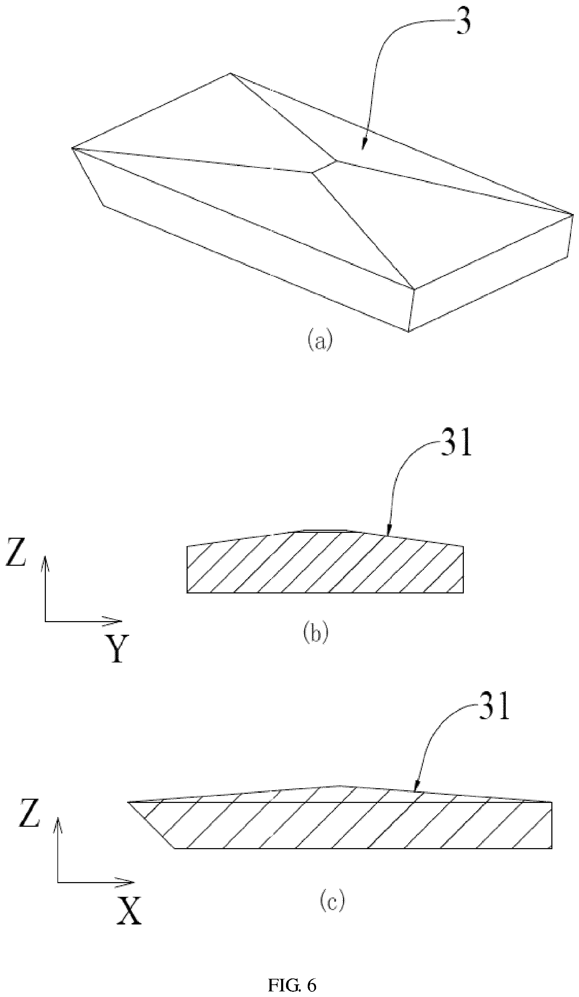

For different applications, the different structures of the reflector 3 in the ultrasonic detection device of the present application can lead to a variety of changes in the ultrasonic energy distribution, as shown in FIGS. 6 to 10 as exemplary illustrations of different applications of the reflector 3:
As shown in the structure of the reflector 3 in FIG. 6, the middle of the reflector 3 along the Y-axis direction is thick and the sides are thin, so as to cause the ultrasonic waves from the ultrasonic probe 1 to disperse along the Y-axis direction; and the middle of the reflector 3 along the X-axis direction is thick and the sides are thin, so as to cause the ultrasonic waves from the ultrasonic probe 1 to disperse along the X-axis direction. The above-structured reflector 3 causes the ultrasonic waves to disperse along various dimensions.

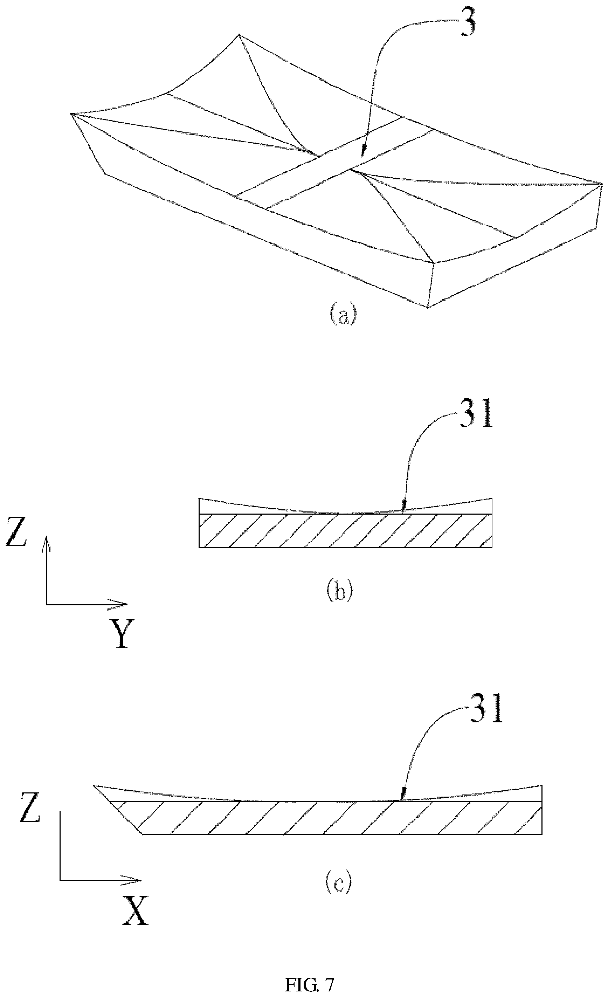

As shown in the structure of the reflector 3 in FIG. 7, the middle of the reflector 3 along the Y-axis direction is thin and the sides are thick, so as to cause the ultrasonic waves from the ultrasonic probe 1 to converge along the Y-axis direction; and the middle of the reflector 3 along the X-axis direction is thin and the sides are thick, so as to cause the ultrasonic waves from the ultrasonic probe 1 to converge along the X-axis direction. The above-structured reflector 3 causes ultrasonic waves to converge along various dimensions.

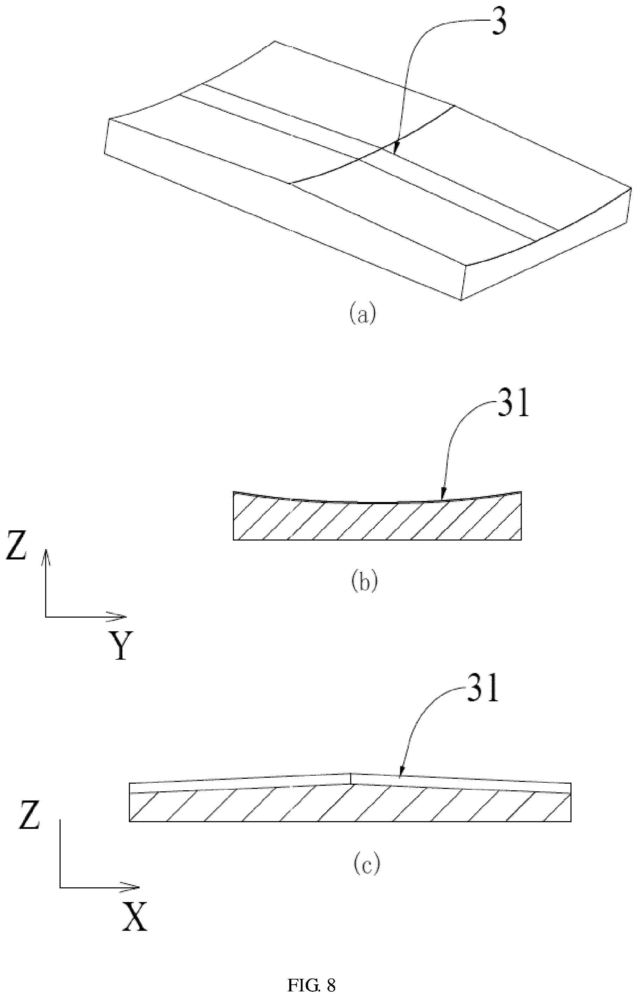

As shown in the structure of the reflector 3 in FIG. 8, the middle of the reflector 3 along the Y-axis direction is thin and the sides are thick, so as to cause the ultrasonic waves from the ultrasonic probe 1 to converge along the Y-axis direction, and the middle of the reflector 3 along the X-axis direction is thick and the sides are thin, so as to cause the ultrasonic waves from the ultrasonic probe 1 to disperse along the X-axis direction. And the reflector 3 of the above-described structure causes a different the distribution of the ultrasonic waves in the X-axis direction and the Y-axis direction.

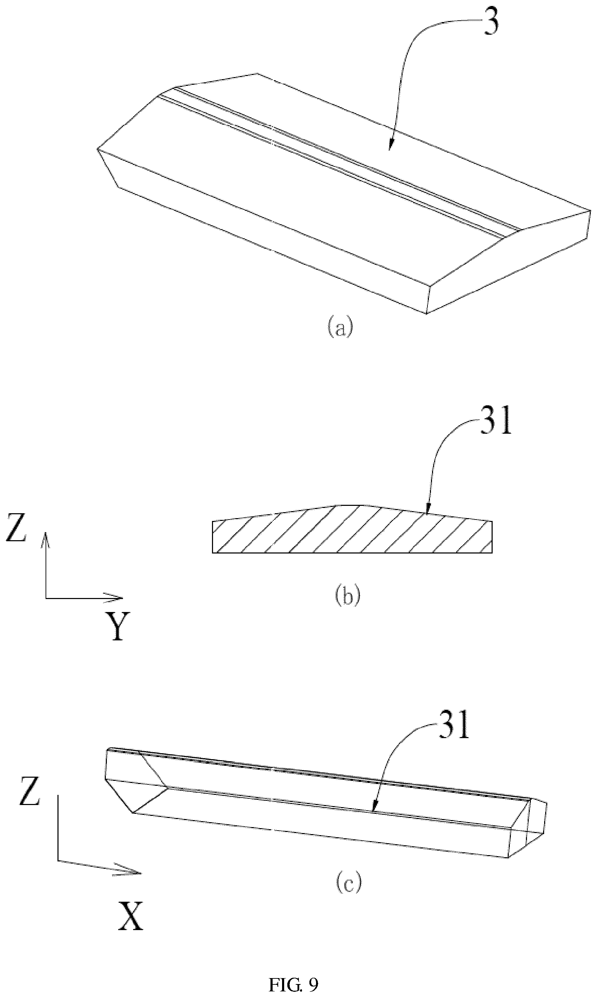

As shown in the structure of the reflector 3 in FIG. 9, the middle of the reflector 3 along the Y-axis direction is thick and the two sides are thin, so as to cause the ultrasonic waves from the ultrasonic probe 1 to diverge along the Y-axis direction, and the thickness of the reflector 3 along the X-axis direction does not change. The reflector 3 of the above structure causes the distribution of the ultrasonic waves to change in the Y-axis direction only, so as to cause the ultrasonic waves to diverge in the Y-axis direction.

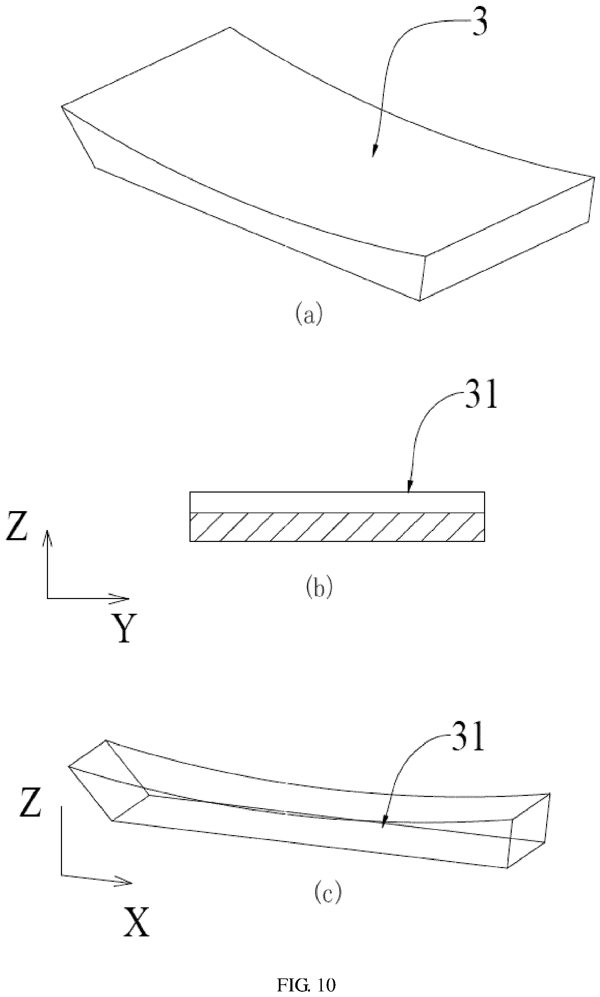

As shown in the structure of the reflector 3 in FIG. 10, the middle of the reflector 3 along the X-axis direction is thin and the two sides are thick, so as to allow ultrasonic waves from the ultrasonic probe 1 to converge along the X-axis direction; and the thickness of the reflector 3 along the Y-axis direction does not change. The reflector 3 of the above structure causes the distribution of the ultrasonic waves to change in the X-axis direction only, so as to allow the ultrasonic waves to converge in the X-axis direction.

## Claims

1. A system for detecting the flow of people **in** a predetermined space, comprising an ultrasonic detection device, wherein
the ultrasonic detection device comprises an ultrasonic probe (1) configured for transmitting ultrasonic waves and receiving echoes and a reflector (3) arranged spaced apart from the ultrasonic probe (1),
the ultrasonic detection device is arranged at a predetermined distance above an entrance and/or exit pathway of said predetermined space, and
the reflector (3) of the ultrasonic detection device is configured for redistributing the energy of the ultrasonic waves to change a detection range of ultrasonic waves such that the detection range perpendicular to a direction of flow of people matches the width of the entrance and/or exit pathway of the predetermined space; wherein
the reflector (3) of the ultrasonic detection device is further configured for redistributing the energy of the ultrasonic waves such that the detection range along the direction of the flow of people matches an average striding distance of the people along the direction of the flow of people.

2. The system as claimed in claim 1, wherein the reflector (3) of the ultrasonic detection device is configured for redistributing the energy of the ultrasonic waves such that the detection range along the direction of the flow of people is 70 cm.

3. The system as claimed in claim 1 or 2, wherein
the ultrasonic probe (1) of the ultrasonic detection device is mounted to extend in parallel with a ground of said predetermined space, and
the reflector (3) of the ultrasonic detection device is mounted to reflect ultrasonic waves transmitted from the ultrasonic probe (1) towards the ground of said predetermined space.

4. The system as claimed in any of the preceding claims, wherein the reflector (3) of the ultrasonic detection device comprises a reflecting surface (31).

5. The system as claimed in claim 4, wherein the reflecting surface (31) comprises a convergence zone and/or a dispersion zone, wherein
the convergence zone is configured to cause the ultrasonic waves transmitted from the ultrasonic probe (1) to converge along an X-axis direction and/or a Y-axis direction, and/or
the dispersion zone is configured to cause the ultrasonic waves transmitted from the ultrasonic probe (1) to disperse along the X-axis direction and/or the Y-axis direction.

6. The system as claimed in claim 5, wherein
the reflector (3) is a reflecting plate and comprises a central portion and two sides opposite to each other, and
along an X-axis direction and/or a Y-axis direction, the reflector (3) is thicker at the central portion and thinner on the two opposite sides, so that the ultrasonic waves transmitted from the ultrasonic probe (1) disperse along the corresponding direction.

7. The system as claimed in claim 5, wherein
the reflector (3) is a reflecting plate and comprises a central portion and two sides opposite to each other, and
along an X-axis direction and/or a Y-axis direction, the reflector (3) is thinner in the central portion and thicker on the two opposite sides, so that the ultrasonic waves transmitted from the ultrasonic probe (1) converge along the corresponding direction.

8. The system as claimed in any of claims 5 to 7, wherein
the ultrasonic probe (1) is mounted to extend along a horizontal direction, and
the reflecting surface (31) is provided inclined outward with respect to the ultrasonic probe (1), so that the reflecting surface (31) reflects the ultrasonic waves transmitted from the ultrasonic probe (1) and the reflected ultrasonic waves propagate in a direction perpendicular to the horizontal direction.

9. The system as claimed in any of claims 5 to 8, further comprising an acoustic wave absorbing device (11) arranged on the ultrasonic probe (1) or on the reflector (3) or in between.

10. The system as claimed in any of the preceding claims, further comprising a mounting bracket (2), wherein the ultrasonic probe (1) is mounted to the mounting bracket (2).

11. The system as claimed in claim 10, wherein the reflector (3) is integrated with the mounting bracket (2).

12. The system as claimed in claim 10, wherein the reflector (3) is integrally formed at an end of the mounting bracket (2).

13. A use of a system as claimed in any of the preceding claims for detecting the flow of people in a predetermined space, wherein
the predetermined space is a supermarket, a shopping mall, a store or a museum.

## Patentansprüche

1. System zum Erfassen des Menschenstroms in einem vorbestimmten Raum, umfassend eine Ultraschall-Erfassungsvorrichtung, wobei
die Ultraschall-Erfassungsvorrichtung eine Ultraschallsonde (1), die zum Senden von Ultraschallwellen und zum Empfangen von Reflexionen ausgelegt ist, und einen Reflektor (3) umfasst, der beabstandet zu der Ultraschallsonde (1) angeordnet ist,
wobei die Ultraschall-Erfassungsvorrichtung in einem vorbestimmten Abstand über einem Eingangs- und/oder Ausgangsweg des vorbestimmten Raums angeordnet ist, und
wobei der Reflektor (3) der Ultraschall-Erfassungsvorrichtung so ausgelegt ist, dass er die Energie der Ultraschallwellen umverteilt, um einen Erfassungsbereich der Ultraschallwellen so zu verändern, dass der Erfassungsbereich senkrecht zu einer Bewegungsrichtung von Personen mit der Breite des Eingangs- und/oder Ausgangswegs des vorbestimmten Raums übereinstimmt; wobei
der Reflektor (3) der Ultraschall-Erfassungsvorrichtung ferner so ausgelegt ist, dass er die Energie der Ultraschallwellen so umverteilt, dass der Erfassungsbereich entlang der Richtung des Menschenstroms einer durchschnittlichen Schrittlänge der Personen entlang der Richtung des Menschenstroms entspricht.

2. System nach Anspruch 1, wobei der Reflektor (3) der Ultraschall-Erfassungsvorrichtung so ausgelegt ist, dass er die Energie der Ultraschallwellen so umverteilt, dass der Erfassungsbereich entlang der Richtung des Menschenstroms 70 cm beträgt.

3. System nach Anspruch 1 oder 2, wobei
die Ultraschallsonde (1) der Ultraschall-Erfassungsvorrichtung so angebracht ist, dass sie sich parallel zu einem Boden des vorbestimmten Raums erstreckt, und
der Reflektor (3) der Ultraschall-Erfassungsvorrichtung so angebracht ist, dass er Ultraschallwellen, die von der Ultraschallsonde (1) ausgesendet werden, in Richtung des Bodens des vorbestimmten Raums reflektiert.

4. System nach einem der vorstehenden Ansprüche, wobei der Reflektor (3) der Ultraschall-Erfassungsvorrichtung eine reflektierende Oberfläche (31) umfasst.

5. System nach Anspruch 4, wobei die reflektierende Oberfläche (31) eine Konvergenzzone und/oder eine Dispersionszone umfasst, wobei
die Konvergenzzone so ausgelegt ist, dass sie bewirkt, dass die von der Ultraschallsonde (1) ausgesendeten Ultraschallwellen entlang einer X-Achsenrichtung und/oder einer Y-Achsenrichtung konvergieren, und/oder
die Dispersionszone so ausgelegt ist, dass sie bewirkt, dass die von der Ultraschallsonde (1) ausgesendeten Ultraschallwellen entlang der X-Achsenrichtung und/oder der Y-Achsenrichtung auseinanderlaufen bzw. dispergieren.

6. System nach Anspruch 5, wobei
der Reflektor (3) eine reflektierende Platte ist und einen mittleren Abschnitt und zwei einander gegenüberliegende Seiten umfasst, und
entlang einer X-Achsenrichtung und/oder einer Y-Achsenrichtung betrachtet, der Reflektor (3) im mittleren Abschnitt dicker und an den beiden gegenüberliegenden Seiten dünner ist, so dass die von der Ultraschallsonde (1) ausgesendeten Ultraschallwellen entlang der entsprechenden Richtung auseinanderlaufen bzw. dispergieren.

7. System nach Anspruch 5, wobei
der Reflektor (3) eine reflektierende Platte ist und einen mittleren Abschnitt und zwei einander gegenüberliegende Seiten umfasst, und
entlang einer X-Achsenrichtung und/oder einer Y-Achsenrichtung betrachtet, der Reflektor (3) im mittleren Abschnitt dünner und an den beiden gegenüberliegenden Seiten dicker ist, so dass die von der Ultraschallsonde (1) übertragenen Ultraschallwellen entlang der entsprechenden Richtung zusammenlaufen bzw. konvergieren.

8. System nach einem der Ansprüche 5 bis 7, wobei
die Ultraschallsonde (1) so angebracht ist, dass sie sich entlang einer horizontalen Richtung erstreckt, und
die reflektierende Oberfläche (31) in Bezug auf die Ultraschallsonde (1) nach außen geneigt vorgesehen ist, so dass die reflektierende Oberfläche (31) die von der Ultraschallsonde (1) ausgesendeten Ultraschallwellen reflektiert und sich die reflektierten Ultraschallwellen in einer Richtung senkrecht zur horizontalen Richtung ausbreiten.

9. System nach einem der Ansprüche 5 bis 8, weiterhin umfassend eine Schallwellen-Absorptionsvorrichtung (11), die an der Ultraschallsonde (1) oder am Reflektor (3) oder dazwischen angeordnet ist.

10. System nach einem der vorstehenden Ansprüche, weiterhin umfassend eine Halterung (2), wobei die Ultraschallsonde (1) an der Halterung (2) angebracht ist.

11. System nach Anspruch 10, wobei der Reflektor (3) in die Halterung (2) integriert ist.

12. System nach Anspruch 10, wobei der Reflektor (3) einstückig bzw. integral an einem Ende der Halterung (2) ausgebildet ist.

13. Verwendung eines Systems nach einem der vorstehenden Ansprüche zum Erfassen des Menschenstroms in einem vorbestimmten Raum, wobei
der vorbestimmte Raum ein Supermarkt, ein Einkaufszentrum, ein Geschäft oder ein Museum ist.

## Revendications

1. Un système pour détecter le flux de personnes dans un espace prédéterminé, comprenant un dispositif de détection à ultrasons, dans lequel
le dispositif de détection à ultrasons comprend une sonde à ultrasons (1) configurée pour émettre des ondes ultrasonores et recevoir des échos, et un réflecteur (3) disposé à distance de la sonde à ultrasons (1),
le dispositif de détection à ultrasons est disposé à une distance prédéterminée au-dessus d'une voie d'entrée et/ou de sortie dudit espace prédéterminé, et
le réflecteur (3) du dispositif de détection à ultrasons est configuré pour redistribuer l'énergie des ondes ultrasonores afin de modifier une plage de détection des ondes ultrasonores de telle sorte que la plage de détection perpendiculaire à une direction de flux de personnes corresponde à la largeur de la voie d'entrée et/ou de sortie de l'espace prédéterminé ; dans lequel
le réflecteur (3) du dispositif de détection à ultrasons est en outre configuré pour redistribuer l'énergie des ondes ultrasonores de telle sorte que la plage de détection le long de la direction du flux de personnes corresponde à une distance moyenne de pas des personnes le long de la direction du flux de personnes.

2. Le système selon la revendication 1, dans lequel le réflecteur (3) du dispositif de détection à ultrasons est configuré pour redistribuer l'énergie des ondes ultrasonores de telle sorte que la plage de détection le long de la direction du flux de personnes soit de 70 cm.

3. Le système selon la revendication 1 ou 2, dans lequel
la sonde ultrasonique (1) du dispositif de détection ultrasonique est montée de manière à s'étendre parallèlement au sol dudit espace prédéterminé, et
le réflecteur (3) du dispositif de détection ultrasonique est monté de manière à réfléchir les ondes ultrasoniques transmises par la sonde ultrasonique (1) vers le sol dudit espace prédéterminé.

4. Le système selon l'une quelconque des revendications précédentes, dans lequel le réflecteur (3) du dispositif de détection à ultrasons comprend une surface réfléchissante (31).

5. Le système selon la revendication 4, dans lequel la surface réfléchissante (31) comprend une zone de convergence et/ou une zone de dispersion, dans lequel
la zone de convergence est configurée pour amener les ondes ultrasonores transmises depuis la sonde ultrasonore (1) à converger le long d'une direction d'axe X et/ou d'une direction d'axe Y, et/ou
la zone de dispersion est configurée pour provoquer la dispersion des ondes ultrasonores transmises par la sonde ultrasonore (1) le long de la direction de l'axe X et/ou de la direction de l'axe Y.

6. Le système selon la revendication 5, dans lequel
le réflecteur (3) est une plaque réfléchissante et comprend une partie centrale et deux côtés opposés l'un à l'autre, et
le long d'une direction d'axe X et/ou d'une direction d'axe Y, le réflecteur (3) est plus épais au niveau de la partie centrale et plus mince sur les deux côtés opposés, de sorte que les ondes ultrasonores transmises depuis la sonde ultrasonique (1) se dispersent le long de la direction correspondante.

7. Le système selon la revendication 5, dans lequel
le réflecteur (3) est une plaque réfléchissante et comprend une partie centrale et deux côtés opposés l'un à l'autre, et
le long d'une direction d'axe X et/ou d'une direction d'axe Y, le réflecteur (3) est plus mince dans la partie centrale et plus épais sur les deux côtés opposés, de sorte que les ondes ultrasonores transmises par la sonde ultrasonique (1) convergent le long de la direction correspondante.

8. Le système selon l'une quelconque des revendications 5 à 7, dans lequel
la sonde ultrasonique (1) est montée de manière à s'étendre le long d'une direction horizontale, et
la surface réfléchissante (31) est inclinée vers l'extérieur par rapport à la sonde ultrasonique (1), de sorte que la surface réfléchissante (31) réfléchit les ondes ultrasonores transmises par la sonde ultrasonore (1) et que les ondes ultrasonores réfléchies se propagent dans une direction perpendiculaire à la direction horizontale.

9. Le système selon l'une quelconque des revendications 5 à 8, comprenant en outre un dispositif d'absorption des ondes acoustiques (11) disposé sur la sonde ultrasonore (1) ou sur le réflecteur (3) ou entre les deux.

10. Le système selon l'une quelconque des revendications précédentes, comprenant en outre un support de montage (2), dans lequel la sonde ultrasonique (1) est montée sur le support de montage (2).

11. Le système selon la revendication 10, dans lequel le réflecteur (3) est intégré au support de montage (2).

12. Le système selon la revendication 10, dans lequel le réflecteur (3) est formé d'un seul tenant à une extrémité du support de montage (2).

13. L'utilisation d'un système selon l'une quelconque des revendications précédentes pour détecter le flux de personnes dans un espace prédéterminé, dans lequel
l'espace prédéterminé est un supermarché, un centre commercial, un magasin ou un musée.
